(19) Europäisches Patentamt
European Patent Office
Office européen des brevets

(11) **EP 3 679 640 B1**

(12) **EUROPEAN PATENT SPECIFICATION**

(45) Date of publication and mention
of the grant of the patent:
**19.06.2024 Bulletin 2024/25**

(51) International Patent Classification (IPC):
**H02K 21/02** (2006.01)      **E04D 13/076** (2006.01)

(21) Application number: **18755653.5**

(52) Cooperative Patent Classification (CPC):
**E04D 13/076; H02K 21/024; H02K 21/026**

(22) Date of filing: **02.08.2018**

(86) International application number:
**PCT/US2018/044955**

(87) International publication number:
**WO 2019/050642 (14.03.2019 Gazette 2019/11)**

(54) **PERMANENT MAGNET MOTOR WITH PASSIVELY CONTROLLED VARIABLE ROTOR/STATOR ALIGNMENT**

PERMANENTMAGNETMOTOR MIT PASSIV GESTEUERTER VARIABLER ROTOR-/STATORAUSRICHTUNG

MOTEUR À AIMANTS PERMANENTS DOTÉ D'ALIGNEMENT VARIABLE DE ROTOR/STATOR À COMMANDE PASSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2017 US 201762554328 P**
**21.03.2018 US 201815927328**

(43) Date of publication of application:
**15.07.2020 Bulletin 2020/29**

(73) Proprietor: **INDIGO TECHNOLOGIES, INC.**
**Cambridge, MA 02139 (US)**

(72) Inventors:
• **DIAS CARLSON, Rachel, A.**
**Somerville, MA 02143 (US)**
• **PURCHASE, Scott, T.**
**Cambridge, MA 02139 (US)**

(74) Representative: **EDP Patent Attorneys B.V.**
**Agro Business Park 2**
**6708 PW Wageningen (NL)**

(56) References cited:
**GB-A- 1 051 591          US-A1- 2004 141 861**
**US-A1- 2007 216 252**

## Description

## CROSS-REFERENCE TO RELATED APPLICATION

This application claims the benefit of U.S. Provisional Application No. 62/554,068, filed September 5, 2017, and U.S. Application No. 15/927,328, filed March 21, 2018. For U.S. purposes, this application is a continuation of U.S. Application No. 15/927,328.

## TECHNICAL FIELD

Embodiments of the invention generally relate to electric motors and more specifically to electric motors that exhibit a variable torque constant.

## BACKGROUND

Electric motors can be characterized by a torque constant, Kt, which is basically the torque produced by the motor divided by the coil current required to produce that torque. Motors with a high torque constant generally are useful for producing high torque at low RPM; whereas motors with a lower torque constant can be more suited to producing higher speeds, where high torque is not required. In a very general sense, torque constant is a measure of the electromagnetic coupling between the coil assembly and the magnetic rotor assembly. Higher coupling produces a higher torque constant as compared to lower coupling. But one of the downsides of using a motor with a higher torque constant is the relatively higher back EMF and induced eddy currents that are generated at the higher speeds. That back EMF and the induced eddy currents lower the maximum speed that is achievable by the motor and result in higher losses at the higher speeds, i.e., less efficient operation. Therefore, it might be desirable to vary the torque constant over the range of operation, providing a higher torque constant at lower speeds and a lower torque constant at higher speeds.

US 2004141861 A1 relates to a pump that includes an impeller, a stator, and a plurality of magnets forming bearing poles coupled to a selected one of the stator or the impeller. The pump further includes a plurality of shorted coils coupled to the other of the stator and the impeller. The plurality of bearing poles and shorted coils co-operate to form an electrodynamic bearing during rotation of the impeller. The electrodynamic bearing supports the impeller either axially or radially during operation of the pump. Hydrodynamic bearing surfaces are provided for generating a hydrodynamic bearing between the impeller and stator. The plurality of magnets may comprise a plurality of distinct magnetic elements or a single element comprising a plurality of distinct magnetic domains. The plurality of distinct magnetic elements or domains may be arranged to form a Halbach array.

US 2007216252 A1 relates to a motor/generator provided with a stator, a first rotor member and a magnetic resistance changing mechanism. The stator has a plurality of coils configured and arranged to be energized with a composite electrical current to form first and second magnetic fields. The first rotor member is configured and arranged to be rotated with respect to the stator using the first magnetic field. The magnetic resistance changing mechanism is configured and arranged to change a magnetic resistance between the stator and the first rotor member using the second magnetic field.

## SUMMARY

In general, in one aspect, the invention features an electric motor including: a first subsystem and a second subsystem, one of the first and second subsystems including a magnetic rotor assembly and the other one of the first and second subsystems comprising a coil stator assembly; a hub assembly supporting the magnetic rotor assembly and the coil stator assembly and defining an axis of rotation; and a bearing assembly supporting at least one of the first and second subsystems on the hub assembly The magnetic rotor assembly includes an array of torque-generating magnets; the coil stator assembly includes an array of driving coils opposing the array of torque-generating magnets of the magnetic stator assembly; the first subsystem includes an array of lift-generating elements for generating axially directed magnetic fields; the second subsystem includes an electrically conductive region aligned with and opposite to the array of lift-generating elements of the first subsystem, the array of lift-generating elements and the electrically conductive region separated from each other in the axial direction by a separation distance; and wherein the bearing assembly enables the magnetic rotor assembly to rotate about the rotational axis of the hub assembly and enables the separation distance of the magnetic rotor assembly and the coil stator assembly to change in response to a lift force generated by the relative movement of the array of lift generating element and the electrically conductive region with respect to each other, as further defined in the accompanying claims.

Other embodiments include one or more of the following features. The bearing assembly supports one or both of the first subsystem on the hub assembly and the second subsystem on the hub assembly. The first subsystem includes the magnetic rotor assembly and the second subsystem includes the coil stator assembly; or alternatively, the first subsystem includes the coil stator assembly and the second subsystem includes the magnetic rotor assembly. The array of lift-generating elements is an array of permanent magnets or an array of electric coils. The bearing assembly includes a rotary bearing assembly supporting the magnetic rotor assembly on the hub assembly. The bearing assembly includes a linear bearing assembly supporting the coil stator assembly on the hub assembly. The bearing assembly supports the magnetic rotor assembly on the hub assembly and enables the magnetic rotor assembly to rotate about the rotational axis and to move back and forth longitudinally along the rotational axis. The second subsystem includes an annularly shaped conductive plate that forms the electrically conductive region. The magnetic rotor assembly and the coil stator assembly form a radial flux motor or an axial flux motor, as further defined in the accompanying claims.

## BRIEF DESCRIPTION OF THE DRAWINGS

Fig. 1 depicts a moving magnet over an electrically conductive plate.

Fig. 2 is a graph of the lift and drag as a function of rotational speed for the system of Fig. 1.

Figs. 3A-B illustrate an embodiment in which the stator assembly moves axially in response to a rotating magnetic rotor assembly.

Fig. 4A shows the lift-generating magnet array on one face of the magnetic rotor assembly.

Fig. 4B shows the torque-generating magnet array on the perimeter wall of the magnetic rotor assembly.

Fig. 4C shows the coil array and the conductive plate on the coil stator assembly.

Fig. 5 is a graph of the torque coefficient, Kt, as a function of rotational speed of the magnetic rotor assembly for the system of Fig. 3A.

Fig. 6A illustrates an embodiment in which the lift-generating magnet array is on the magnetic rotor assembly and the linear bearing assembly supports the coil stator assembly.

Fig. 6B illustrates an embodiment in which the lift-generating magnet array is on the magnetic rotor assembly, the coil stator assembly is stationary, and the magnetic rotor assembly is supported on the hub by a bearing assembly that permits both rotational movement and axially directed movement of the magnetic rotor assembly.

Fig. 7 illustrates an embodiment in which the drive coils on the coil stator assembly also used as the lift-generating elements.

Fig. 8 illustrates an embodiment which employs an array of lift-generating coils on the coil stator assembly that is different from the array of drive.

Fig. 9 illustrates an embodiment in which one component of the lift-generating mechanism (e.g. the conductive plate) is supported by a part of the motor that is neither the coil stator assembly nor the magnetic rotor assembly.

Fig. 10 illustrates an axial flux motor that employs the lift-generating mechanism to implement the variable torque coefficient.

In the preceding figures, like elements and like components may be identified with like reference numbers.

## DETAILED DESCRIPTION

The permanent magnet (PM) synchronous motors described herein provide a mechanism for varying the torque constant of the motor to achieve improved efficiency over a broader range torque/speed (e.g. low torque and high speed and high torque at low speed). In general, the motors change the torque constant passively and in a way that is directly correlated to current and/or speed of motor. They employ a separate magnetic field generating array that creates lift (and drag), the magnitude of which depends on the speed of the motor. The resulting lift moves one of the motor elements in an axial direction relative to the other element, thereby changing the magnet engagement length and thus, the torque constant.

The lift mechanism relies on the eddy currents induced in a conductive plate by a magnet field as it moves over the conductive plate. The induced eddy currents generate their own magnetic field that opposes the magnetic field of the magnet. The interaction of the magnetic field of the magnet and the magnetic field produced by the eddy currents yields a force that pushes the magnet away from the conductive plate.

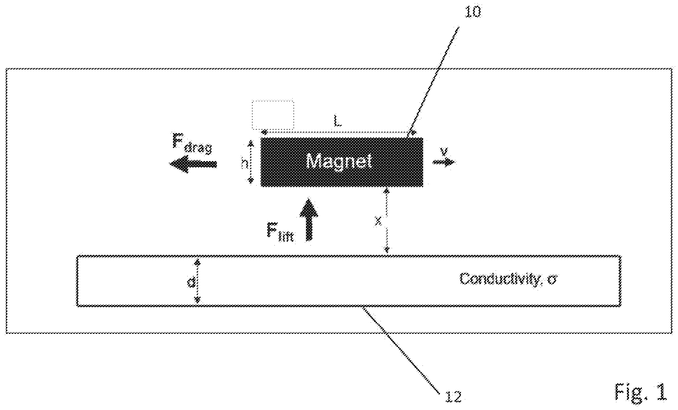

This is illustrated by Fig. 1 which shows a magnet 10 moving to the right and parallel to a conductive plate 12 at a speed of v and at a distance x above the plate. In this example, the magnet has a length, L, a width, b, and a thickness, h and the conductive plate has a thickess, d. The magnet creates eddy currents in the conductive material that, in turn, act on the magnet with both a repulsive (lift) $F_{lift}$, and a drag force, $F_{drag}$. The directions of these forces are shown in the figures. The law governing this interaction is referred to as Lenz's Law, which says that moving a magnet over a conducting material causes an opposing B field and therefore a lift force. The lift force for the arrangement shown in Fig. 1 is a function of the magnet properties, the geometry of the magnet and conductive plate, and the speed at which the magnet is travelling.

For a radial motor, the lift-generating magnet array will be moving across the conductive plate at some rotational velocity $\omega$, which corresponds to a tangential velocity v, i.e.,

$$v = \omega r$$

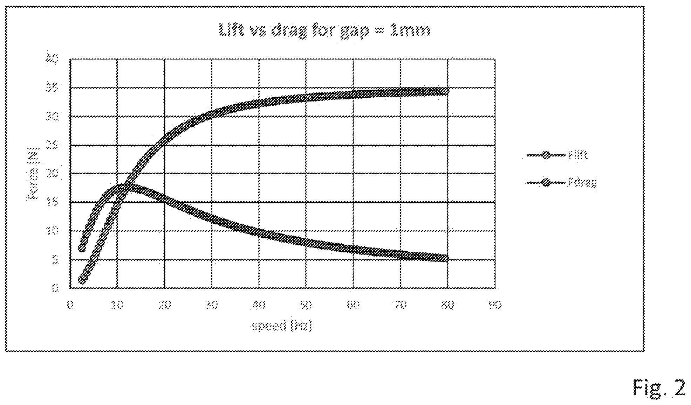

As shown on Fig. 2, for very slow speeds, the drag force will be higher than the lift force. But once a critical velocity is reached, the lift force will become much larger though there will always be some drag force. (Note: In Fig. 2, the lower curve represent the drag force and the upper curve represents the lift force.)

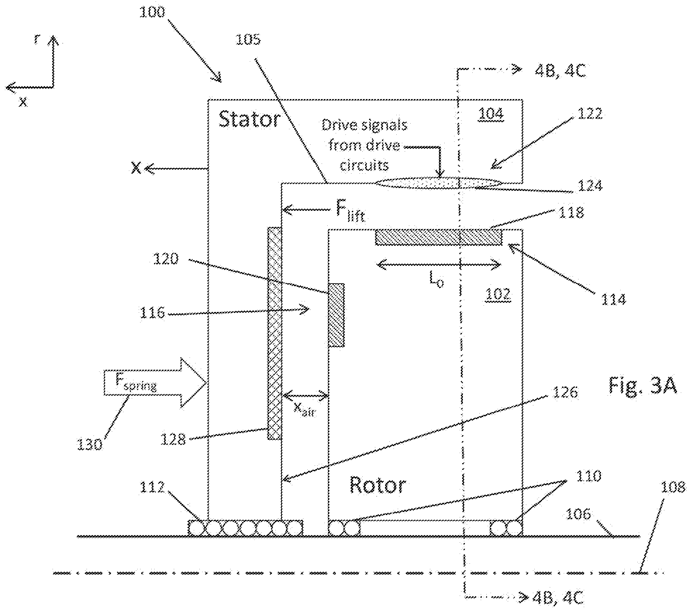

An electric motor 100 in which this principal is employed is depicted schematically in Fig. 3A. It includes a magnetic rotor assembly 102 and a coil stator assembly 104, both of which are mounted on a shaft 106 (or hub assembly) having a longitudinal axis 108. The magnetic rotor assembly 102 is supported on the shaft 106 through bearings 110 which enable the magnetic rotor assembly 102 to rotate about the shaft but do not permit it to move along the shaft in an axial direction. The coil stator assembly 104 on the other hand is mounted on the shaft 106 through a system of linear bearings 112 that permit the coil stator assembly 104 to move back and forth along the shaft in an axial direction but do not permit it to rotate about the shaft.

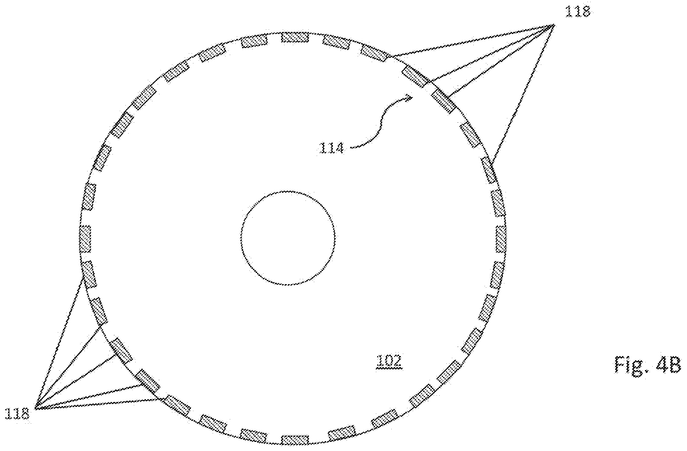

The magnetic rotor assembly 102 includes two magnet arrays, namely, a torque-generating magnet array 114 and a lift-generating magnet array 116. As shown in Fig. 4B, the torque-generating magnet array 114 is formed by permanent magnets 118 arranged around the perimeter of the magnetic rotor assembly 102 and with their magnetization directions pointing in a radial direction with respect to the axis of rotation of the rotor assembly. For example, the magnets may be identically shaped and identically sized elements that are evenly spaced around the rotor assembly with their magnetization directions switching between a positive radial direction and negative radial direction. Alternatively, the magnetization directions may be arranged to form a Halbach array. The different ways of arranging the permanent magnets of rotor assembly are well known to person skilled in the art.

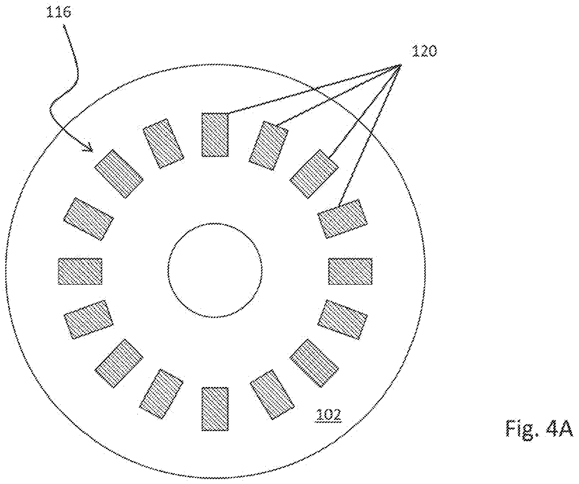

As shown in Fig. 4A, the lift-generating magnet array 116 is formed by permanent magnets 120 arranged in a circular pattern on the face of the magnetic rotor assembly 102 that faces the coil stator assembly 104. The permanent magnets 120 of the lift-generating magnet array 116 are arranged so that their magnetization directions are all pointing in an axial direction with a pattern of N-S-N-S around the array. Alternatively, other patterns could be used such as N-N-S-S-N-N-S-S... or a Halbach array to name just two of other possible examples.

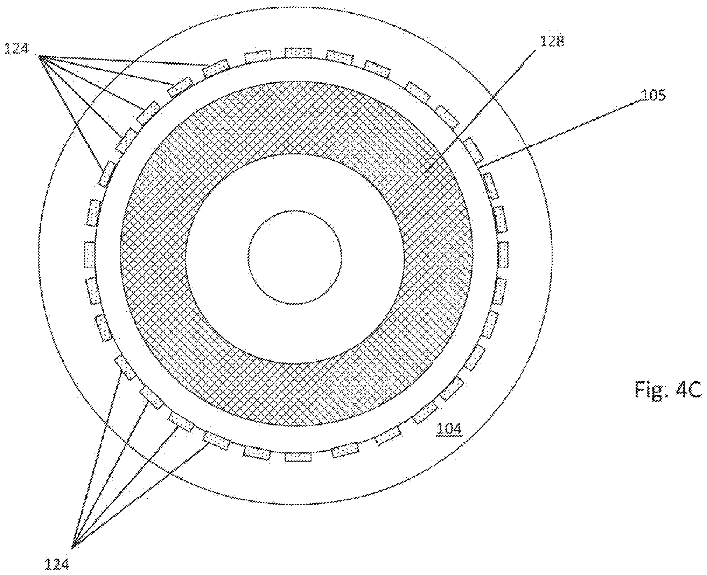

In this embodiment, as illustrated by Fig. 4C, the coil stator assembly 104 has a cylindrically shaped outer wall 105 surrounding the magnetic rotor assembly 102 and on the inner side of which are mounted an array of evenly spaced coils 124 of a coil array 122 encircling the rotational axis 108. The coils 124 of the coil array 122 are arranged to be opposite to the magnets 118 of the magnet array 114 with their axes radially directed. When appropriate drive signals are applied to the coils 124, the interaction of the coil-generated magnetic fields with the fields of the magnets 118 will produce a torque on the magnetic rotor assembly 102 causing it to rotate about the rotational axis 108 in a direction and with a speed that depends on the drive signals being applied.

Referring to Fig. 3A, on an inside, vertical wall 126 of the coil stator assembly 104 - i.e., the wall that faces the magnetic rotor assembly 102 - there is a ring of conductive material (or an annularly shaped conductive plate) 128 (e.g. aluminum plate) that encircles the rotational axis. Alternatively, the body of the coil stator assembly 104 can be made of aluminum (or some electrically conductive material) in which case no separate annularly shaped conductive plate is required but rather the body of the coil stator assembly itself can serve as the conductive ring.

Finally, there is a spring assembly 130 for providing a return force against the backside of the coil stator assembly 104 that resists leftward movement of the coil stator assembly (i.e., movement of the coil stator assembly away from the magnetic rotor assembly). When the motor is not operating, the spring assembly 130 pushes the coil stator assembly 104 towards the magnetic rotor assembly and against a stop (not shown) at which position the drive coil array and the torque-generating magnet array have maximum overlap with each other. In the described embodiment, the spring assembly 130 includes a constant force spring for which the generated force is substantially constant over a range of operation; however, springs with other force characteristics could be used. In addition, means other than springs could be used to generate the return force.

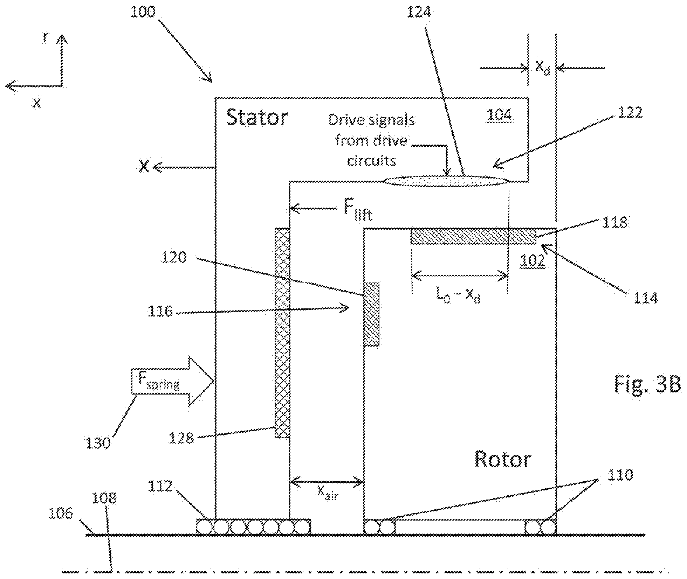

During operation, the movement of the lift-generating magnet array 116 over the conducting plate 128 as the magnetic rotor assembly 102 rotates produces a force, Fiift, on the coil stator assembly 104 pushing it on its linear bearing assembly 112 to the left and away from the magnetic rotor assembly 102 thereby increasing the gap, $x_{air}$, between the two, as illustrated by Fig. 3B. As the speed of rotation increases, the gap $x_{air}$ increases by an amount that depends on the strength of the lift array, the conductive material properties, and the spring force. As the gap increases, $F_{lift}$ decreases until it equals the force applied by the spring assembly.

If the spring force that returns the stator to the fully engaged position is a constant, as is assumed in this example to be the case, then the lift force will also be a constant throughout the range of operation. That is,

$$\sum F_x = 0$$

$$F_{spring} = F_{lift} = Constant$$

For a radial flux motor, the torque constant scales linearly with the magnet engagement length, as follows:

$$Kt(x) = NI(L_0 - x_d)B$$

where $L_0$ is the length of maximum overlap between the coil and the magnet, $(L_0-x_d)$ is the "engagement length" or the measure of the amount of overlap when the coil has moved a distance $x_d$ away from maximum overlap, N is the number of windings in the coil, I is the current through the coil, and B is the field strength of the magnet as seen by the coil.

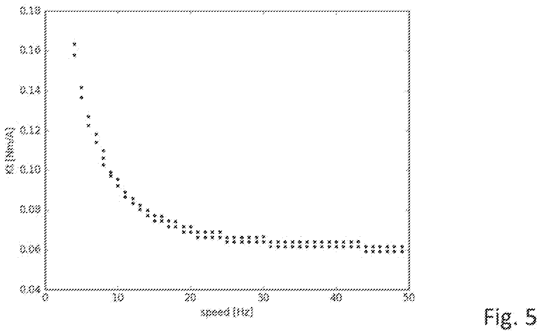

As note above, as the motor speeds up, the gap $x_{air}$ increases, which decreases the engagement length $(L_0-x_d)$, thereby decreasing the torque constant Kt. An example graph of this relationship for a constant spring force of 2N for a sample motor is shown in Fig. 5. This means that at higher speeds, the motor will be less voltage limited and will have reduced rotational losses as compared to a motor which has a constant Kt. The rotational losses (such as core losses and eddy current losses) also scale with the engagement length, $(L_0 -x_d)$. In other words, the variable torque constant motor not only has a higher efficiency over a larger range of torque/speed combinations, it also has a higher top speed. This is due to the decrease in torque constant seen at higher speeds, which in turn results on decreased back EMF, allowing the motor to achieve a higher speed for a given drive voltage.

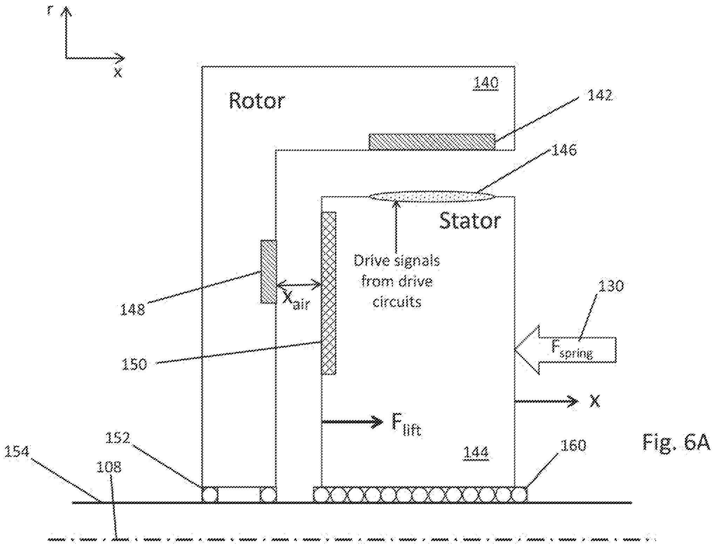

There are other ways of implementing the general concept that is represented by the embodiment of Figs. 3A and 3B. For example, another embodiment is illustrated by Fig. 6A in which a magnetic rotor assembly 140, which holds an array of torque-generating permanent magnets 142, surrounds a coil stator assembly 144, which holds an array of coils 146. In other respects, the design is very similar to that of Figs. 3A-B in that there is a lift-generating magnet array 148 on an inner sidewall of the magnetic rotor assembly 140 with the magnetization directions of the magnets axially oriented and a conductive plate 150 supported by the coil stator assembly 144 so that it faces the lift-generating magnet array 148. The magnetic rotor assembly 140 is supported on a shaft 154 (or hub) by a bearing assembly 152 that allows it to rotate about the longitudinal axis of the shaft 154 but not move in an axial direction along that shaft. The coil stator assembly 144, on the other hand, is supported on the shaft 154 by a linear bearing assembly 160 allowing it to move back and forth in an axial direction but not rotate about that shaft 154. The spring assembly 130 exerts a force against the backside of the coil stator assembly 130. As with the embodiment shown in Figs. 3A-B, the rotating lift magnet array 148 on the magnetic rotor assembly 140 induces eddy currents in the conductive plate 150 which moves the coil stator assembly 144 to the right, decreasing the magnetic engagement length and thereby reducing the torque constant.

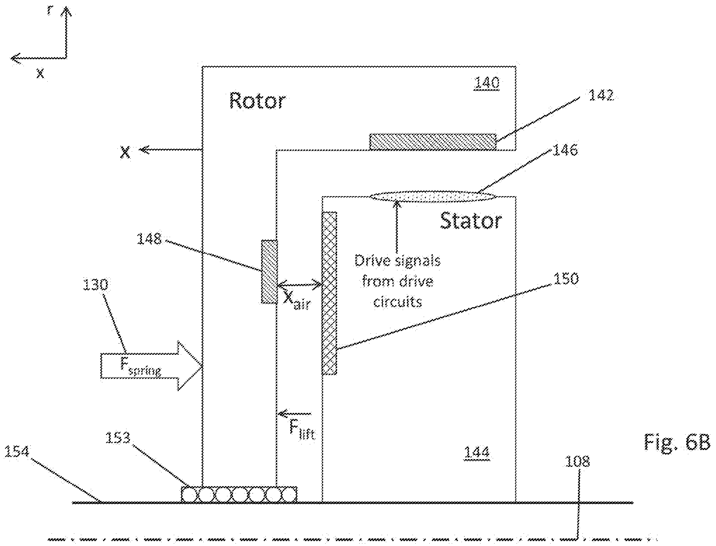

An arrangement similar to that illustrated by Fig. 6A is shown in Fig. 6B. In this other arrangement, the coil stator assembly 144 is stationary on the shaft 154 (i.e., it can neither rotate or move longitudinally) and the magnet rotor assembly 140 is supported on the shaft 154 by a bearing assembly 153 that enables it to both rotate about the shaft and move back and forth longitudinally on the shaft. In this case, the spring assembly 130 exerts a restorative force against the backside of the magnetic rotor assembly 140.

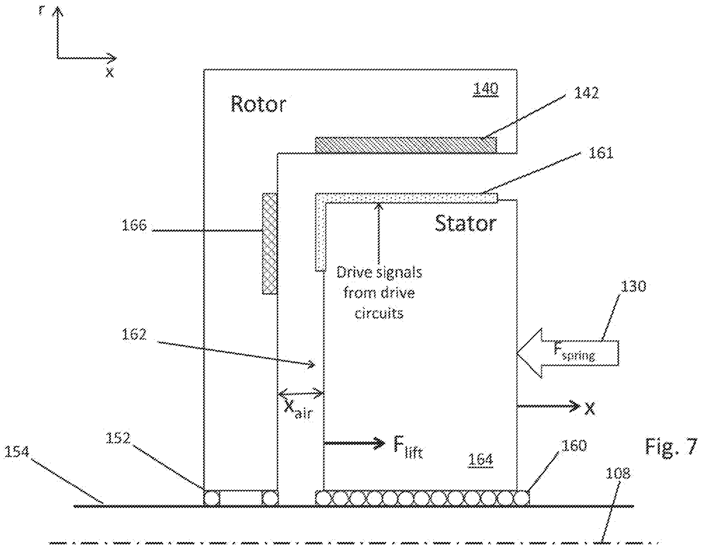

Yet another arrangement is illustrated by Fig. 7 which shows an embodiment that is similar to that illustrated by Fig. 6A except the function performed by the lift magnet array is instead performed by the drive coils 160. More specifically, the drive coils 161 extend from the outer circumference of the coil stator assembly 164 over onto the front face 162 of the coil stator assembly 164 where they also generate a magnetic field directed axially and toward the conductive plate 166 on the magnetic rotor assembly 140. That axially directed magnetic field induces eddy currents in the rotating conductive plate 166 thereby generating a lift force that pushes the coil stator assembly 164 to the right against the spring 130 and to a new location depending on the rate of rotation.

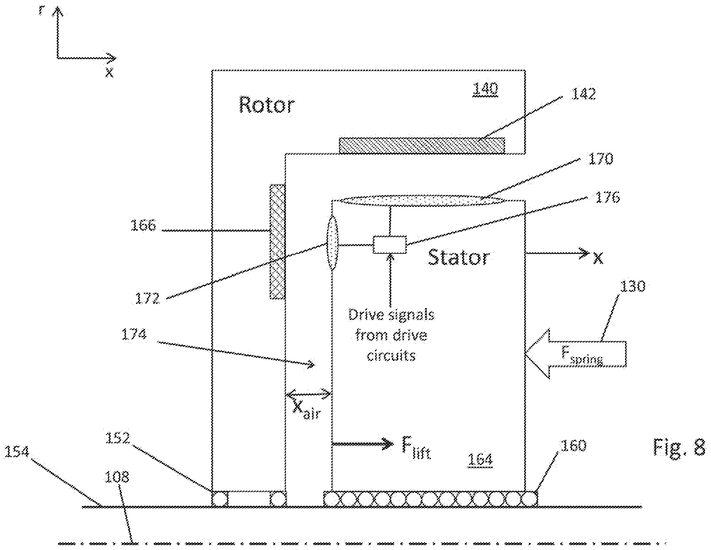

Still another approach is illustrated by Fig. 8 which shows an embodiment that is similar to that illustrated by Fig. 7 except instead of using the drive coils 170 to generate the field that induces the lift force, separate lift-generating coils 172 are used. In other words, on the face 174 of the coil stator assembly 164 that is opposite and faces the conductive plate 166 on the magnetic rotor assembly 140 there are lift-generating coils 172 arrayed around the coil stator assembly 164 and in alignment with the conductive plate 166. In this embodiment, the lift coils are equal in number to the drive coils and they receive the same drive signal. Thus, there is a bus 176 to which the drive signals are delivered and to which corresponding lift and drive coils are connected.

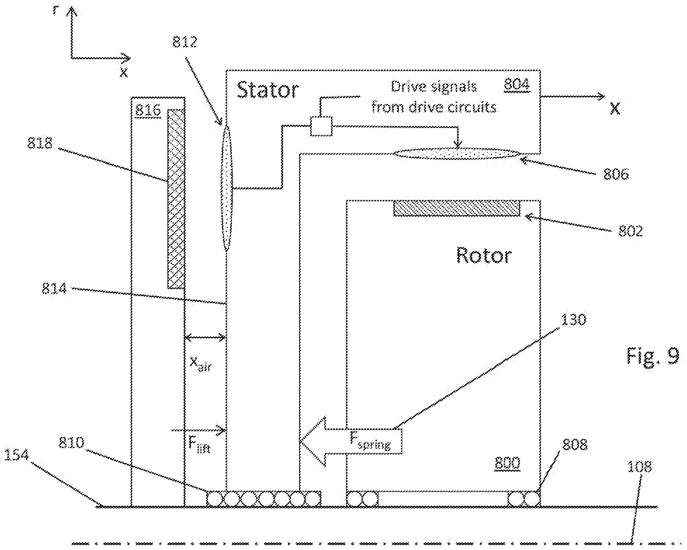

In all of the embodiments described thus far, one of the elements that was involved in the generating the lift force was a rotating element, namely, the magnetic rotor assembly. Other embodiments are possible for which this is not the case. See, for example, the embodiment illustrated by Fig. 9. In this embodiment, the magnetic rotor assembly 800 carries the torque-generating magnet array 802 and it rotates within the coil stator assembly 804 that carries the drive coil array 806. The magnetic rotor assembly 800 is mounted on the hub assembly 154 through bearings 808 which enable it to rotate about the rotational axis 108 of the shaft 154. The coil stator assembly 804 is supported on the shaft 154 by a set of linear bearings 810 that permit it to move back and forth along the shaft 154 in an axial direction but do not permit it to rotate about the shaft. The non-rotating coil stator assembly 804 also includes the lift-generating coil array 812 on its backside 814, i.e., the side facing away from the magnetic rotor assembly 800. Adjacent to the backside of the coil stator assembly 804 there is a disk (or structure) 816 that is fixedly mounted on the shaft 154 so that it can neither rotate nor move in an axial direction along the shaft. The disk 816 includes an annularly shaped conductive plate 818 that faces the lift-generating coil array 812 on the backside of the coil stator assembly 804. The spring assembly 130 pushes against the coil stator assembly 804 urging it towards the disk 816 and against a stop (not shown) when no signal is applied to the lift-generating coil array 812. In this particular embodiment, the signals that drive the lift-generating coil array 812 are the same as the drive signals that drive the drive coil array 806. (The lift-generating coil array 812 could be driven separately by different signals.)

During operation, the drive signals applied to the lift-generating array will produce a magnetic field at the conductive plate 818 that changes in accordance with the changing drive signals. This will induce eddy currents in the conductive plate which will, in turn, produce a lift force that pushes the coil stator assembly 804 away from the disk 816 and against the return force produced by the spring assembly 130, as previously described.

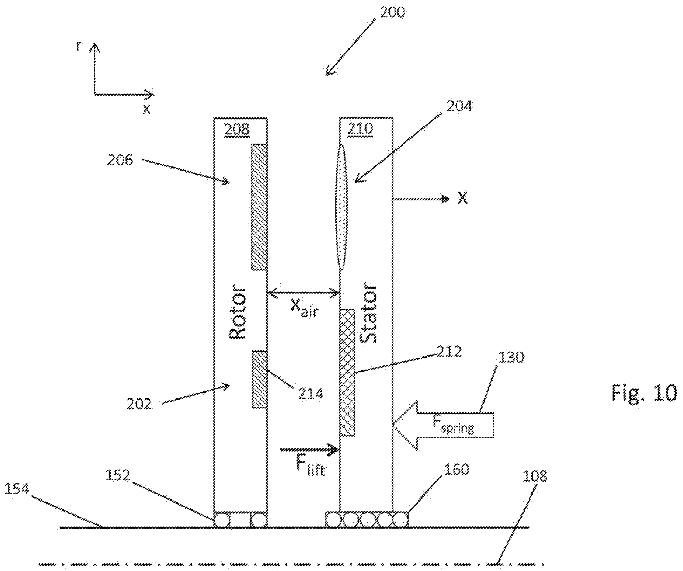

The examples provided so far all involve radial flux permanent magnet synchronous motors. The concepts are also applicable to axial flux permanent magnet synchronous motors as well. Fig. 10 depicts an axial flux motor 200 that employs a lift magnet array 202 to vary the width, $x_{air}$, of the gap between the drive coils 204 and the torque-generating magnets 206 of the magnetic rotor assembly 208. The coil stator assembly 210 has an array of drive coils 204 arrayed around the periphery of the coil stator assembly 210. On an opposing face of the magnetic rotor assembly 208 there is a group of magnets arrayed around the periphery of the rotor assembly. The magnets of the magnet array have their magnetization directions axially directed in some pattern such as, without limitation: N-S-N-S-N..; 2N-2S-2N-2S...; or a Halbach array. On the same face of the magnetic rotor assembly 208 and closer to the rotational axis there is also a set of lift-generating magnets 214 arrayed around the rotational axis. These magnets also have their magnetization directions axially directed to produce a magnetic field that changes from a positive axial direction to a negative axial direction as one moves around the array of magnets. On a corresponding location of the opposing face of the coil stator assembly (the same face on which the drive coils are located), there is a conductive plate 212. As the magnetic rotor assembly rotates, the interaction of the magnetic field of the lift array with the conductive plate generates a lift force as previously described and causes the coil stator assembly to move to the right reducing the coupling between the drive coils and the torque-generating magnet array and thereby reducing the torque coefficient for the motor. In other respects, the motor of Fig. 10 operates the same as has been previously described for the other embodiments with certain numbered elements performing the functions of previously described like-numbered elements.

The present invention is not limited to the described embodiments. Alterations and/or modifications of the described embodiments are contemplated as being alternative forms of the invention as far as they do not depart from the scope of the invention, which is defined by the appended claims.

Also note that these concepts are generally applicable to motor types other than AC permanent magnet synchronous motors.

**Claims**

1. An electric motor (100, 200) comprising:

   a first subsystem and a second subsystem, one of the first and second subsystems comprising a magnetic rotor assembly (102, 140, 208, 800) and the other one of the first and second subsystems comprising a coil stator assembly (104, 144, 164, 210, 804);
   a hub assembly (106, 154) supporting the magnetic rotor assembly and the coil stator assembly and defining a rotational axis (108); and
   a bearing assembly (110, 112, 152, 153, 160, 808, 810) supporting at least one of the first and second subsystems on the hub assembly,
   wherein the magnetic rotor assembly comprises an array of torque-generating magnets (114, 206, 802);
   wherein the coil stator assembly comprises an array of driving coils opposing the array of torque-generating magnets of the magnetic rotor assembly;
   wherein the first subsystem comprises an array of lift-generating elements (116, 148, 202, 812) for generating axially directed magnetic fields;
   wherein the second subsystem comprises an electrically conductive region (128, 150, 166, 212, 818) aligned with and opposite to the array of lift-generating elements of the first subsystem, the array of lift-generating elements and the electrically conductive region separated from each other in the axial direction by a separation distance; and
   wherein the bearing assembly enables the magnetic rotor assembly to rotate about the rotational axis of the hub assembly and enables at least one of the first or second subsystems to move longitudinally along the rotational axis to allow the separation distance of the magnetic rotor assembly and the coil stator assembly to change in response to a lift force generated by eddy currents induced in the electrically conductive region by the movement of the array of lift-generating elements and the electrically conductive region with respect to each other; and wherein, as a rotational velocity of the magnetic rotor assembly increases, the separation distance increases causing a decrease in magnetic coupling between the array of torque-generating magnets and the array of driving coils.

2. The electric motor of claim 1, wherein the bearing assembly supports the first subsystem on the hub assembly.

3. The electric motor of claim 1, wherein the bearing assembly supports the second subsystem on the hub assembly.

4. The electric motor of claim 1, wherein: the bearing assembly supports both the magnetic rotor assembly and the coil stator assembly on the hub assembly; and the bearing assembly allows the magnetic rotor assembly to rotate about the rotational axis of the hub assembly and allows linear movement of the coil stator assembly along the rotational axis of the hub assembly.

5. The electric motor of claim 1, wherein the first subsystem comprises the magnetic rotor assembly and the second subsystem comprises the coil stator assembly,

6. The electric motor of claim 1, wherein the first subsystem comprises the coil stator assembly and the second subsystem comprises the magnetic rotor assembly,

7. The electric motor of claim 1, wherein the array of lift-generating elements is an array of permanent magnets (120, 214).

8. The electric motor of claim 1, wherein the array of lift-generating elements is an array of electric coils (204, 812).

9. The electric motor of claim 1, wherein the bearing assembly includes a rotary bearing assembly (110) supporting the magnetic rotor assembly on the hub assembly.

10. The electric motor of claim 9, wherein the bearing assembly includes a linear bearing assembly (112) supporting the coil stator assembly on the hub assembly and allowing linear movement along the hub in a direction of the rotational axis.

11. The electric motor of claim 1, wherein the bearing assembly supports the magnetic rotor assembly on the hub assembly and enables the magnetic rotor assembly to rotate about the rotational axis and to move back and forth longitudinally along the rotational axis.

12. The electric motor of claim 1, wherein the second subsystem comprises an annularly shaped conductive plate that forms the electrically conductive region.

13. The electric motor of claim 1, wherein the magnetic rotor assembly and the coil stator assembly form a radial flux motor.

14. The electric motor of claim 1, wherein the magnetic rotor assembly and the coil stator assembly form an axial flux motor (200).

15. The electric motor of claim 1, wherein the electric motor is configured to apply a restorative force to one of the magnetic rotor assembly or the coil stator assembly in opposition to the lift force to limit the change in separation distance between the array of lift-generating elements and the electrically conductive region.

**Patentansprüche**

1. Elektromotor (100, 200), umfassend:

ein erstes Teilsystem und ein zweites Teilsystem, wobei eines des ersten und des zweiten Teilsystems eine Magnetrotorbaugruppe (102, 140, 208, 800) umfasst und das andere des ersten und des zweiten Teilsystems eine Spulenstatorbaugruppe (104, 144, 164, 210, 804) umfasst;
eine Nabenbaugruppe (106, 154), die die Magnetrotorbaugruppe und die Spulenstatorbaugruppe lagert und eine Drehachse (108) definiert; und
eine Lagerbaugruppe (110, 112, 152, 153, 160, 808, 810), die mindestens eines des ersten und des zweiten Teilsystems auf der Nabenbaugruppe lagert,
wobei die Magnetrotorbaugruppe eine Reihe von drehmomenterzeugenden Magneten (114, 206, 802) umfasst;
wobei die Spulenstatorbaugruppe eine Reihe von Antriebsspulen umfasst, die der Reihe von drehmomenterzeugenden Magneten der Magnetrotorbaugruppe gegenüberliegen;
wobei das erste Teilsystem eine Reihe von Auftrieb erzeugenden Elementen (116, 148, 202, 812) zum Erzeugen von axial ausgerichteten Magnetfeldern umfasst;
wobei das zweite Teilsystem einen elektrisch leitfähigen Bereich (128, 150, 166, 212, 818) umfasst, der mit der Reihe von Auftrieb erzeugenden Elementen des ersten Teilsystems ausgerichtet ist und diesen gegenüberliegt, wobei die Reihe von Auftrieb erzeugenden Elementen und der elektrisch leitfähige Bereich in der axialen Richtung um einen Trennabstand voneinander getrennt sind; und

wobei die Lagerbaugruppe der Magnetrotorbaugruppe erlaubt, sich um die Drehachse der Nabenbaugruppe zu drehen, und mindestens einem des ersten oder des zweiten Teilsystems erlaubt, sich in Längsrichtung entlang der Drehachse zu bewegen, um zu ermöglichen, dass sich der Trennabstand der Magnetrotorbaugruppe und der Spulenstatorbaugruppe in Reaktion auf eine Auftriebskraft verändert, die durch Wirbelströme erzeugt wird, die in dem elektrisch leitfähigen Bereich durch die Bewegung der Reihe von Auftrieb erzeugenden Elementen und des elektrisch leitfähigen Bereichs in Bezug zueinander induziert werden; und wobei sich bei sich erhöhender Drehgeschwindigkeit der Magnetrotorbaugruppe der Trennabstand erhöht, was eine Verringerung der Magnetkopplung zwischen der Reihe von drehmomenterzeugenden Magneten und der Reihe von Antriebsspulen bewirkt.

2. Elektromotor nach Anspruch 1, wobei die Lagerbaugruppe das erste Teilsystem auf der Nabenbaugruppe lagert.

3. Elektromotor nach Anspruch 1, wobei die Lagerbaugruppe das zweite Teilsystem auf der Nabenbaugruppe lagert.

4. Elektromotor nach Anspruch 1, wobei:
die Lagerbaugruppe sowohl die Magnetrotorbaugruppe als auch die Spulenstatorbaugruppe auf der Nabenbaugruppe lagert; und die Lagerbaugruppe der Magnetrotorbaugruppe ermöglicht, sich um die Drehachse der Nabenbaugruppe zu drehen, und eine lineare Bewegung der Spulenstatorbaugruppe entlang der Drehachse der Nabenbaugruppe ermöglicht.

5. Elektromotor nach Anspruch 1, wobei das erste Teilsystem die Magnetrotorbaugruppe umfasst und das zweite Teilsystem die Spulenstatorbaugruppe umfasst.

6. Elektromotor nach Anspruch 1, wobei das erste Teilsystem die Spulenstatorbaugruppe umfasst und das zweite Teilsystem die Magnetrotorbaugruppe umfasst.

7. Elektromotor nach Anspruch 1, wobei die Reihe von Auftrieb erzeugenden Elementen eine Reihe von Permanentmagneten (120, 214) ist.

8. Elektromotor nach Anspruch 1, wobei die Reihe von Auftrieb erzeugenden Elementen eine Reihe von elektrischen Spulen (204, 812) ist.

9. Elektromotor nach Anspruch 1, wobei die Lagerbaugruppe eine Drehlagerbaugruppe (110) umfasst, die die Magnetrotorbaugruppe auf der Nabenbaugruppe lagert.

10. Elektromotor nach Anspruch 9, wobei die Lagerbaugruppe eine Linearlagerbaugruppe (112) umfasst, die die Spulenstatorbaugruppe auf der Nabenbaugruppe lagert und eine lineare Bewegung entlang der Nabe in einer Richtung der Drehachse ermöglicht.

11. Elektromotor nach Anspruch 1, wobei die Lagerbaugruppe die Magnetrotorbaugruppe auf der Nabenbaugruppe lagert und der Magnetrotorbaugruppe erlaubt, sich um die Drehachse zu drehen und sich in Längsrichtung entlang der Drehachse vor und zurück zu bewegen.

12. Elektromotor nach Anspruch 1, wobei das zweite Teilsystem eine ringförmig geformte leitfähige Platte umfasst, die den elektrisch leitfähigen Bereich bildet.

13. Elektromotor nach Anspruch 1, wobei die Magnetrotorbaugruppe und die Spulenstatorbaugruppe einen Radialflussmotor bilden.

14. Elektromotor nach Anspruch 1, wobei die Magnetrotorbaugruppe und die Spulenstatorbaugruppe einen Axialflussmotor (200) bilden.

15. Elektromotor nach Anspruch 1, wobei der Elektromotor dazu ausgelegt ist, eine der Auftriebskraft entgegenwirkende Rückstellkraft auf eine der Magnetrotorbaugruppe oder der Spulenstatorbaugruppe aufzubringen, um die Veränderung des Trennabstands zwischen der Reihe von Auftrieb erzeugenden Elementen und dem elektrisch leitfähigen Bereich zu begrenzen.

**Revendications**

1. Moteur électrique (100, 200), comprenant :

un premier sous-système et un second sous-système, un des premier et second sous-systèmes comprenant un ensemble rotor magnétique (102, 140, 208, 800) et l'autre des premier et second sous-systèmes comprenant un ensemble stator bobiné (104, 144, 164, 210, 804) ;
un ensemble moyeu (106, 154) supportant l'ensemble rotor magnétique et l'ensemble stator bobiné et définissant un axe de rotation (108) ; et
un ensemble palier (110, 112, 152, 153, 160, 808, 810) supportant au moins un des premier et second sous-systèmes sur l'ensemble moyeu,

l'ensemble rotor magnétique comprenant un réseau d'aimants générateurs de couple (114, 206, 802) ;

l'ensemble stator bobiné comprenant un réseau de bobines d'excitation opposées au réseau d'aimants générateurs de couple de l'ensemble rotor magnétique ;

le premier sous-système comprenant un réseau d'éléments générateurs de portance (116, 148, 202, 812) pour générer des champs magnétiques dirigés axialement ;

le second sous-système comprenant une région électroconductrice (128, 150, 166, 212, 818) alignée et opposée au réseau d'éléments générateurs de portance du premier sous-système, le réseau d'éléments générateurs de portance et la région électroconductrice étant séparés l'un de l'autre dans la direction axiale par une distance de séparation ; et

l'ensemble palier permettant à l'ensemble rotor magnétique de tourner autour de l'axe de rotation de l'ensemble moyeu et permettant à au moins un des premier et second sous-systèmes de se déplacer longitudinalement le long de l'axe de rotation pour permettre à la distance de séparation entre l'ensemble rotor magnétique et l'ensemble stator bobiné de varier en réponse à une force de portance générée par des courants de Foucault induits dans la région électroconductrice par le déplacement mutuel du réseau d'éléments générateurs de portance et de la région électroconductrice ; et la distance de séparation augmentant au fur et à mesure de l'augmentation de la vitesse de rotation de l'ensemble rotor magnétique, entraînant une diminution du couplage magnétique entre le réseau d'aimants générateurs de couple et le réseau de bobines d'excitation.

2. Moteur électrique selon la revendication 1, dans lequel l'ensemble palier supporte le premier sous-système sur l'ensemble moyeu.

3. Moteur électrique selon la revendication 1, dans lequel l'ensemble palier supporte le second sous-système sur l'ensemble moyeu.

4. Moteur électrique selon la revendication 1, dans lequel :

l'ensemble palier supporte à la fois l'ensemble rotor magnétique et l'ensemble stator bobiné sur l'ensemble moyeu ; et l'ensemble palier permet à l'ensemble rotor magnétique de tourner autour de l'axe de rotation de l'ensemble moyeu et permet un déplacement linéaire de l'ensemble stator bobiné le long de l'axe de rotation de l'ensemble moyeu.

5. Moteur électrique selon la revendication 1, dans lequel le premier sous-système comprend l'ensemble rotor magnétique et le second sous-système comprend l'ensemble stator bobiné.

6. Moteur électrique selon la revendication 1, dans lequel le premier sous-système comprend l'ensemble stator bobiné et le second sous-système comprend l'ensemble rotor magnétique.

7. Moteur électrique selon la revendication 1, dans lequel le réseau d'éléments générateurs de portance est un réseau d'aimants permanents (120, 214).

8. Moteur électrique selon la revendication 1, dans lequel le réseau d'éléments générateurs de portance est un réseau de bobines électriques (204, 812).

9. Moteur électrique selon la revendication 1, dans lequel l'ensemble palier comprend un ensemble palier rotatif (110) supportant l'ensemble rotor magnétique sur l'ensemble moyeu.

10. Moteur électrique selon la revendication 9, dans lequel l'ensemble palier comprend un ensemble palier linéaire (112) supportant l'ensemble stator bobiné sur l'ensemble moyeu et permettant un déplacement linéaire le long du moyeu dans une direction de l'axe de rotation.

11. Moteur électrique selon la revendication 1, dans lequel l'ensemble palier supporte l'ensemble rotor magnétique sur l'ensemble moyeu et permet à l'ensemble rotor magnétique de tourner autour de l'axe de rotation et de se déplacer d'avant en arrière longitudinalement le long de l'axe de rotation.

12. Moteur électrique selon la revendication 1, dans lequel le second sous-système comprend une plaque conductrice de forme annulaire qui forme la région électroconductrice.

13. Moteur électrique selon la revendication 1, dans lequel l'ensemble rotor magnétique et l'ensemble stator bobiné forment un moteur à flux radial.

14. Moteur électrique selon la revendication 1, dans lequel l'ensemble rotor magnétique et l'ensemble stator bobiné forment un moteur à flux axial (200).

15. Moteur électrique selon la revendication 1, le moteur électrique étant configuré pour appliquer une force de rétablissement à l'ensemble rotor magnétique ou à l'ensemble stator bobiné en opposition à la force de portance pour limiter la variation de la distance de séparation entre le réseau d'éléments générateurs de portance et la région électroconductrice.

Fig. 1

Fig. 2

Fig. 3A

Fig. 3B

Fig. 4A

Fig. 4B

Fig. 4C

Fig. 5

Fig. 6A

Fig. 6B

Fig. 7

EP 3 679 640 B1

Fig. 8

EP 3 679 640 B1

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62554068
- US 92732818
- US 927328
- US 2004141861 A1
- US 2007216252 A1